# EUROPEAN PATENT SPECIFICATION

(11) **EP 3 073 096 B1**
(45) Date of publication and mention of the grant of the patent: **17.01.2018**
(21) Application number: 16153382.3
(22) Date of filing: 29.01.2016
(51) Int. Cl.: F02C 3/30, F02C 6/04, F02C 6/18, F01D 25/30, F01N 3/02

(54) **ADVANCED HUMID AIR TURBINE SYSTEM AND EXHAUST GAS TREATMENT SYSTEM**
VERBESSERTES FEUCHTLUFTTURBINENSYSTEM UND ABGASBEHANDLUNGSSYSTEM
SYSTÈME DE TURBINE À AIR HUMIDE ET SYSTÈME DE TRAITEMENT DE GAZ D'ÉCHAPPEMENT

(30) Priority: 25.03.2015 JP 2015063161
(43) Date of publication of application: 28.09.2016
(73) Proprietor: Mitsubishi Hitachi Power Systems, Ltd., Yokohama 220-8401 (JP)
(72) Inventor: SATO, Kazuhiko, Yokohama, 220-8401 (JP)
(74) Representative: MERH-IP Matias Erny Reichl Hoffmann Patentanwälte PartG mbB

(56) References cited:
- EP-A1- 2 402 567
- EP-A2- 1 612 379
- EP-A2- 1 860 300
- EP-A2- 1 898 066
- GB-A- 2 436 128

## Description

### BACKGROUND OF THE INVENTION

### 1. Field of the Invention

The present invention relates to an advanced humid air turbine system and an exhaust gas treatment system therefor.

### 2. Description of Related Art

An advanced humid air turbine system is known as a gas turbine system that can increase output and enhance power generation efficiency. Such an advanced humid air turbine system injects water or steam into a gas turbine to thereby increase a flow rate of a working fluid. In the known advanced humid air turbine system, because of a high water content in an exhaust gas, a plume consisting of steam may be produced when the exhaust gas is discharged from a stack. Because the plume degrades aesthetic appearance, there is a need to discharge the exhaust gas without allowing the plume to be produced.

JP-10-110628-A discloses an exhaust gas treatment apparatus for a gas turbine (see Fig. 5 of JP-10-110628-A). This exhaust gas treatment apparatus uses a water recovery unit that cools part of exhaust gases containing a large amount of water content from the gas turbine to thereby separate and recover part of the water content from the exhaust gases. The exhaust gas treatment apparatus allows the rest of the exhaust gases to bypass the water recovery unit without cooling and mixes the rest of the exhaust gases with the part of the exhaust gases that has passed through the water recovery unit. Thereafter, the exhaust gas treatment apparatus discharges the mixed exhaust gases via, for example, a stack into the atmosphere.

UK Patent Application GB 2436128 A discloses a gas turbine engine system with a condenser. In one aspect, the system comprises a compressor system, a combustor, a turbine system, vapour generating means having a dry-run capability, for transferring heat to a fluid to be vaporised when not being run dry, a bypass damper and a condenser. In one operational position of the damper (during start up) working fluid can bypass the condenser through a conduit to the engine exhaust.

### SUMMARY OF THE INVENTION

In the exhaust gas treatment apparatus disclosed in JP-10-110628-A, the water content contained in the exhaust gases cooled by the water recovery unit is discharged from the water recovery unit under a saturated condition of the exhaust gas temperature. A line that bypasses the water recovery unit is therefore connected to a stack or an exhaust gas flow path downstream of the water recovery unit to thereby heat the cooled exhaust gases with the high temperature exhaust gases that have bypassed the water recovery unit. This configuration, according to JP-10-110628-A, can prevent generation of the plume without the need to additionally provide a heater (heat exchanger) for heating the exhaust gases that flow through the water recovery unit.

The stack or the exhaust gas flow path downstream of the water recovery unit is, however, typically required to be designed to be compatible with high flow rates of 10 to 20 m/s in view of diffusion of the exhaust gases into the atmosphere. The configuration in which the line that bypasses the water recovery unit is simply connected to the stack or the exhaust gas flow path downstream of the water recovery unit, as in the exhaust gas treatment apparatus disclosed in JP-10-110628-A, does not allow the exhaust gases that have passed through the water recovery unit and the exhaust gases that have bypassed the water recovery unit to be sufficiently mixed with each other. As a result, the generation of the plume cannot be prevented.

The present invention has been made to solve the foregoing problem and one of the objects of the present invention is to provide an advanced humid air turbine system and an exhaust gas treatment system for the advanced humid air turbine system that can prevent generation of a plume the need to provide a heater for heating cooled exhaust gases.

To solve the foregoing problem, the present invention incorporates configurations as defined in the appended claims.

This application includes a plurality of means for solving the foregoing problem. In one aspect, the present invention provides an exhaust gas treatment system for an advanced humid air turbine system that treats water content contained in an exhaust gas discharged from a gas turbine system in which a working fluid is humidified. The exhaust gas treatment system includes: an exhaust gas flow path through which the exhaust gas discharged from the gas turbine system flows; a water recovery unit that is connected to the exhaust gas flow path and that is configured to cool an exhaust gas that flows in from the exhaust gas flow path by a refrigerant to thereby recover water content contained in the exhaust gas; and a bypass flow path through which part of the exhaust gas from the exhaust gas flow path flows so as to avoid cooling by the refrigerant in the water recovery unit. The bypass flow path has a downstream end disposed in the water recovery unit (32; 32D; 32E) at a position downstream in a flow direction of the exhaust gas with respect to a zone in which the exhaust gas is cooled in the water recovery unit.

In the aspect of the present invention, the bypass flow path that bypasses the cooling in the water recovery unit has the downstream end disposed at a position downstream in the flow direction of the exhaust gas with respect to the zone in which the exhaust gas is cooled, inside the water recovery unit in which a flow rate of the exhaust gas is lower than a flow rate in a stack or the exhaust gas flow path downstream of the water recovery unit. This configuration enables sufficient mixing of the cooled exhaust gas with the exhaust gas at high temperatures from the bypass flow path. A plume can thus be prevented from being generated without the need to provide a heater for heating the cooled exhaust gas.

Problems, configurations, and effects other than those described above will be readily understood by the following detailed description of embodiments in conjunction with the accompanying drawings.

### BRIEF DESCRIPTION OF THE DRAWINGS

Fig. 1 is a configuration diagram of an advanced humid air turbine system according to a first embodiment of the present invention and an exhaust gas treatment system for the advanced humid air turbine system according to the first embodiment;
Fig. 2 is a configuration diagram of the exhaust gas treatment system for the advanced humid air turbine system according to the first embodiment of the present invention shown in Fig. 1;
Fig. 3 is a schematic transverse sectional view of a water recovery unit as a component of the exhaust gas treatment system for the advanced humid air turbine system according to the first embodiment of the present invention shown in Fig. 2, taken along the arrow III-III in Fig. 2;
Fig. 4 is a characteristic diagram showing a relation between an exhaust gas temperature and absolute humidity in the advanced humid air turbine system according to the first embodiment of the present invention;
Fig. 5 is a configuration diagram of an exhaust gas treatment system for an advanced humid air turbine system according to a modification of the first embodiment of the present invention;
Fig. 6 is a configuration diagram of an exhaust gas treatment system for an advanced humid air turbine system according to a second embodiment of the present invention;
Fig. 7 is a schematic transverse sectional view of a water recovery unit as a component of the exhaust gas treatment system for the advanced humid air turbine system according to the second embodiment of the present invention shown in Fig. 6, taken along the arrow VII-VII in Fig. 6;
Fig. 8 is a configuration diagram of an exhaust gas treatment system for an advanced humid air turbine system according to a third embodiment of the present invention;
Fig. 9 is a schematic transverse sectional view of a water recovery unit as a component of the exhaust gas treatment system for the advanced humid air turbine system according to the third embodiment of the present invention shown in Fig. 8, taken along the arrow IX-IX in Fig. 8;
Fig. 10 is a configuration diagram of an exhaust gas treatment system for an advanced humid air turbine system according to a further embodiment of the present invention; and
Fig. 11 is a configuration diagram of an exhaust gas treatment system for an advanced humid air turbine system according to a still further embodiment of the present invention.

### DESCRIPTION OF THE PREFERRED EMBODIMENTS

Advanced humid air turbine systems and exhaust gas treatment systems according to preferred embodiments of the present invention will be described below with reference to the accompanying drawings.

### [First Embodiment]

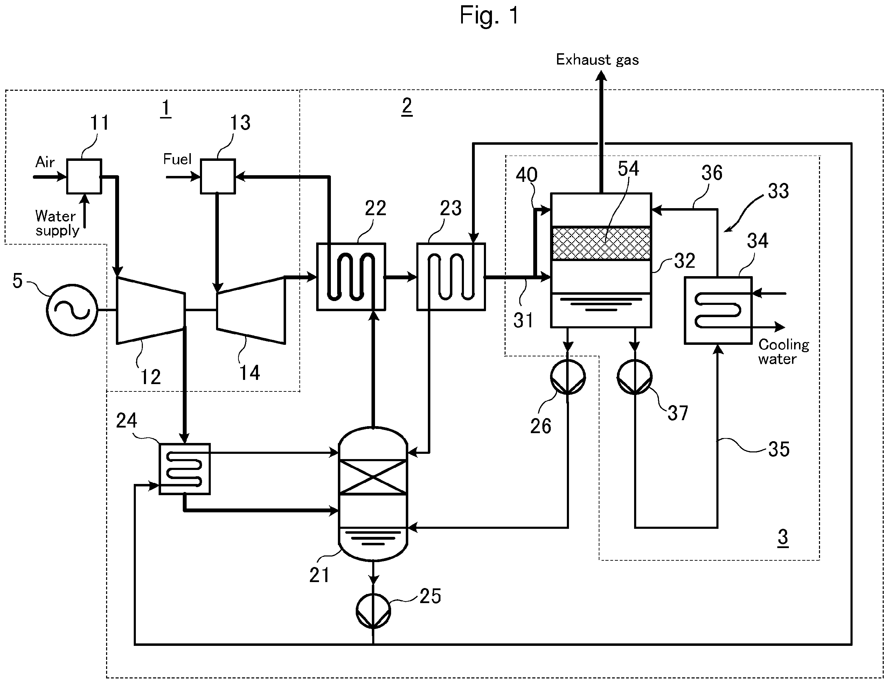

The following describes, with reference to Fig. 1, a system configuration of an advanced humid air turbine system according to a first embodiment of the present invention.

Fig. 1 is a configuration diagram of the advanced humid air turbine system according to the first embodiment of the present invention and the exhaust gas treatment system for the advanced humid air turbine system according to the first embodiment. In Fig. 1, the arrows indicate directions of flows of a working fluid and an exhaust gas that flow through the advanced humid air turbine system, and of water injected and recovered in the advanced humid air turbine system.

In Fig. 1, the advanced humid air turbine system includes a gas turbine system 1, a humidification-regeneration cycle system 2, and an exhaust gas treatment system 3. The humidification-regeneration cycle system 2 humidifies and preheats the working fluid of the gas turbine system 1. The exhaust gas treatment system 3 treats water content contained in the exhaust gas discharged from the gas turbine system 1. A gas turbine generator 5 is mechanically connected to the gas turbine system 1.

The gas turbine system 1 includes, for example, a water atomization cooling unit 11, a compressor 12, a combustor 13, and a turbine 14. Specifically, the water atomization cooling unit 11 humidifies intake air. The compressor 12 compresses air from the water atomization cooling unit 11. The combustor 13 burns fuel with compressed air from the compressor 12 as a combustion enhancing agent to generate a combustion gas. The turbine 14 is driven by the combustion gas from the combustor 13, thereby driving the compressor 12 and the gas turbine generator 5.

The humidification-regeneration cycle system 2 includes a humidification tower 21 and a recuperator 22. Specifically, the humidification tower 21 humidifies compressed air delivered from the compressor 12. The recuperator 22 preheats compressed air containing a high water content from the humidification tower 21 by heat exchange with the exhaust gas from the turbine 14. The humidification-regeneration cycle system 2 further includes a circulation system. The circulation system is used for reusing water held in the humidification tower 21 as, for example, humidifying water for humidifying compressed air from the compressor 12. The circulation system includes, for example, an economizer 23, an air cooler 24, and a humidification tower circulation water pump 25. Specifically, the economizer 23 heats the water held in the humidification tower 21 by heat exchange with the exhaust gas from the turbine 14. The air cooler 24 cools the compressed air from the compressor 12 by heat exchange with the water held in the humidification tower 21. The humidification tower circulation water pump 25 delivers the water held in the humidification tower 21 to the economizer 23 and the air cooler 24, and resupplies the humidification tower 21 with the water as humidifying water. The humidification-regeneration cycle system 2 further includes, for example, a humidification tower makeup water pump 26 that replenishes the humidification tower 21 with recovery water recovered by a water recovery unit 32 to be described later.

The exhaust gas treatment system 3 includes an exhaust gas flow path 31, the water recovery unit 32, and a circulation cooling system 33. Specifically, the exhaust gas flow path 31 is a passage through which the exhaust gas that is discharged from the turbine 14 and then passes through the recuperator 22 and the economizer 23 flows, such as a duct and a pipe. The water recovery unit 32 is connected to the exhaust gas flow path 31. The water recovery unit 32 cools by cooling water (a refrigerant) the exhaust gas that flows in from the exhaust gas flow path 31 to thereby recover water content contained in the exhaust gas, specifically, the water fed to the humidification tower 21, water content generated through combustion of fuel, and the like. The circulation cooling system 33 circulates water used previously as cooling water in the water recovery unit 32 and water recovered from the exhaust gas in the water recovery unit 32 as cooling water to the water recovery unit 32. The circulation cooling system 33 includes a water recovery circulation water cooler 34, a recovery water delivery line 35, a cooling water supply line 36, and a water recovery circulation water pump 37. Specifically, the water recovery circulation water cooler 34 cools the recovery water recovered in the water recovery unit 32. The recovery water delivery line 35 is connected to the water recovery unit 32 and an inlet of the water recovery circulation water cooler 34. The cooling water supply line 36 is connected to an outlet of the water recovery circulation water cooler 34 and the water recovery unit 32. The water recovery circulation water pump 37 is disposed in the recovery water delivery line 35. The water recovery circulation water pump 37 delivers the recovery water of the water recovery unit 32 to the water recovery circulation water cooler 34 to thereby supply the cooled recovery water to the water recovery unit 32. Additionally, the exhaust gas treatment system 3 further includes a bypass line 40 through which part of the exhaust gas from the exhaust gas flow path 31 flows. The bypass line 40 has an upstream side connected to the exhaust gas flow path 31 and a downstream side connected to the water recovery unit 32.

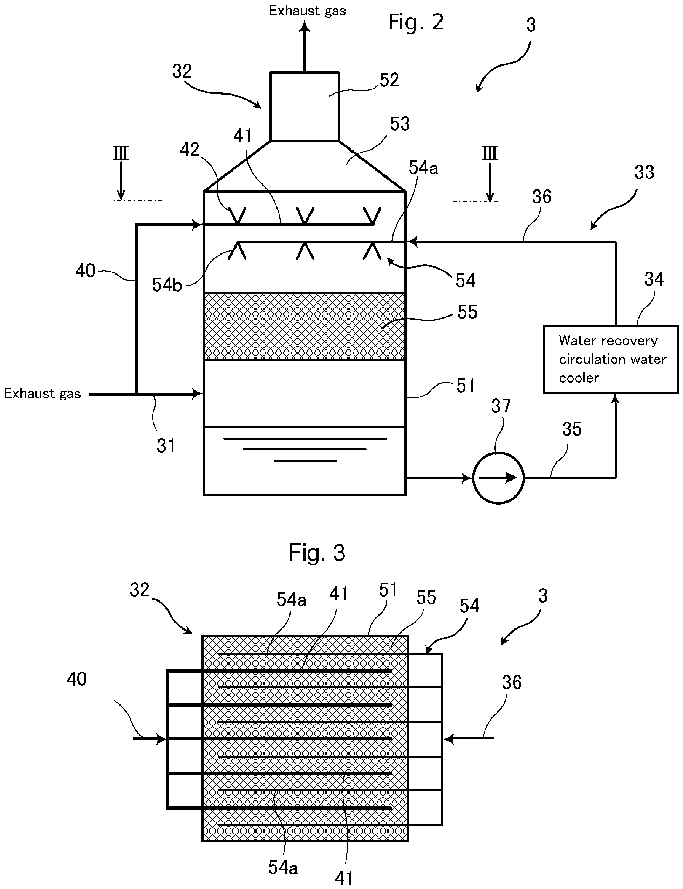

The following describes, with reference to Figs. 2 and 3, a detailed configuration of the exhaust gas treatment system for the advanced humid air turbine system according to the first embodiment of the present invention.

Fig. 2 is a configuration diagram of the exhaust gas treatment system for the advanced humid air turbine system according to the first embodiment of the present invention shown in Fig. 1. Fig. 3 is a schematic transverse sectional view of the water recovery unit as a component of the exhaust gas treatment system for the advanced humid air turbine system according to the first embodiment of the present invention shown in Fig. 2, taken along the arrow III-III in Fig. 2. In Figs. 2 and 3, the arrows indicate directions of flows of the exhaust gas and water in the circulation cooling system of the exhaust gas treatment system. In Figs. 2 and 3, the same elements as used in Fig. 1 are each identified by the same reference number and detailed description of these elements is therefore omitted herein.

In Fig. 2, the water recovery unit 32 of the exhaust gas treatment system 3 includes a container main section 51, a discharge section 52, a tapered flow path section 53, and a distributor 54. Specifically, the container main section 51 connects at a lower portion thereof to the exhaust gas flow path 31. The exhaust gas from the exhaust gas flow path 31 flows into the container main section 51. The discharge section 52 is disposed above the container main section 51 and discharges the exhaust gas. The tapered flow path section 53 connects the container main section 51 to the discharge section 52. The distributor 54 is disposed above (at a downstream side in the flow direction of the exhaust gas with respect to) the connection portion of the container main section 51 and the exhaust gas flow path 31. The distributor 54 sprays cooling water from the cooling water supply line 36. The water recovery unit 32 further includes a water recovery unit packing 55 with a large number of pores, grooves, slits, and the like. The water recovery unit packing 55 is disposed between the connection portion of the container main section 51 and the exhaust gas flow path 31 and the distributor 54. The water recovery unit 32 is a counter-current flow type and vertical type unit in which the exhaust gas flows upwardly relative to the cooling water sprayed downwardly.

To efficiently recover water content from the exhaust gas by allowing the exhaust gas to be sufficiently mixed with the cooling water and cooled, the container main section 51 has a flow path cross-sectional area that results in a flow rate of the exhaust gas lower than a flow rate in the stack and the exhaust gas flow path downstream of the water recovery unit 32. Meanwhile, the discharge section 52 is formed to have a flow path cross-sectional area smaller than the flow path cross-sectional area of the container main section 51 in light of a flow rate of the exhaust gas downstream of the discharge section 52. As shown in Figs. 2 and 3, the distributor 54 includes a plurality of cooling water branch pipes 54a and a plurality of water recovery unit distribution spray nozzles 54b. Specifically, the cooling water branch pipes 54a are connected to the cooling water supply line 36. The water recovery unit distribution spray nozzles 54b are disposed at each of the cooling water branch pipes 54a and are spaced apart from each other. The water recovery unit distribution spray nozzles 54b spray cooling water from the cooling water supply line 36 downwardly.

The bypass line 40 includes an exhaust gas mixer at a downstream end thereof, disposed above (at a downstream side in the flow direction of the exhaust gas with respect to) the distributor 54 in the container main section 51. The exhaust gas mixer includes a plurality of bypass branch pipes 41 and a plurality of exhaust gas bypass nozzles 42. The exhaust gas bypass nozzles 42 are disposed at each of the bypass branch pipes 41 and are spaced apart from each other. The exhaust gas bypass nozzles 42 spray the exhaust gas from the bypass line 40 upwardly. The bypass line 40 functions as a bypass flow path through which part of the exhaust gas from the exhaust gas flow path 31 flows so as to avoid cooling by the cooling water in the container main section 51. In addition, the exhaust gas mixer of the bypass line 40 is a structure that promotes uniform mixing of the exhaust gas having flowed through the bypass line 40 with the exhaust gas cooled inside the container main section 51.

The following describes, with reference to Fig. 1, operations of the advanced humid air turbine system according to the first embodiment of the present invention.

In Fig. 1, intake air is humidified by the water atomization cooling unit 11 before being compressed by the compressor 12. The compressed air is cooled by the air cooler 24 in order for a humidification action at the humidification tower 21 in a later stage of the air cooler 24 to be performed at high efficiency. The compressed air then flows into the humidification tower 21 for humidification. The highly humid compressed air is heated by heat exchange with the exhaust gas from the turbine 14 in the recuperator 22, so that water content in the compressed air completely vaporizes. This compressed air is guided into the combustor 13, mixed with fuel, and burns. A combustion gas at high temperature is thereby generated. The combustion gas drives the turbine 14, so that thermal energy is converted into kinetic energy. This kinetic energy is consumed through driving the compressor 12 and is converted into electric energy by the gas turbine generator 5.

The exhaust gas discharged from the turbine 14 contains a large amount of water content because of the humidification processes at the water atomization cooling unit 11 and the humidification tower 21. Part of thermal energy of the exhaust gas is recovered by the recuperator 22 that heats the compressed air humidified by the humidification tower 21. Part of the thermal energy of the exhaust gas is further recovered by the economizer 23 that heats the humidifying water from the humidification tower 21. The recuperator 22 and the economizer 23 thus recover part of the thermal energy of the exhaust gas discharged from the gas turbine system 1, thereby enhancing thermal efficiency of the system.

The exhaust gas having passed through the economizer 23 is guided into the water recovery unit 32. Part of the water content of the exhaust gas is recovered by the water recovery unit 32 and resultant exhaust gas is discharged into the atmosphere. Part of the water content recovered by the water recovery unit 32 is fed to the humidification tower 21 by the humidification tower makeup water pump 26. By recovering the water content added to the working fluid of the gas turbine system 1 using the water recovery unit 32 as described above, an effective use of water resources is promoted.

The following describes, with reference to Figs. 2 and 3, operations of the exhaust gas treatment system for the advanced humid air turbine system according to the first embodiment of the present invention.

Most part of the exhaust gas having passed through the economizer 23 (see Fig. 1) flows into the lower portion of the container main section 51 of the water recovery unit 32 by way of the exhaust gas flow path 31. Meanwhile, some part (the rest) of the exhaust gas having passed through the economizer 23 flows to the upper side of the distributor 54 in the container main section 51 by way of the bypass line 40.

The exhaust gas that has flowed in through the exhaust gas flow path 31 passes through the water recovery unit packing 55 disposed inside the container main section 51. At this time, cooling water is sprayed downwardly from the water recovery unit distribution spray nozzles 54b of the distributor 54 inside the water recovery unit 32, so that the cooling water flows over the water recovery unit packing 55 disposed below the distributor 54. Thus, the exhaust gas that passes vertically through the water recovery unit packing 55 from below upwardly is cooled through gas-liquid contact with the cooling water on the water recovery unit packing 55 to become wet steam. Part of the water content in the exhaust gas condenses and is recovered. The exhaust gas that thereafter flows toward the side of the distributor 54 is also cooled through the gas-liquid contact with the cooling water sprayed from the distributor 54 and part of the water content in the exhaust gas also condenses and is recovered. Specifically, the exhaust gas that flows into the container main section 51 through the exhaust gas flow path 31 is cooled by the cooling water in a zone under the distributor 54 (water recovery unit distribution spray nozzles 54b). As such, part of the water content contained in the exhaust gas that flows into the container main section 51 through the exhaust gas flow path 31 condenses and is recovered. This action reduces a water content ratio in the exhaust gas.

The water recovery unit packing 55 has a large number of pores, grooves, slits, and the like, and thus has a wide surface area. The water recovery unit packing 55 can thereby enhance efficiency in the gas-liquid contact between the exhaust gas and the cooling water. In addition, the distributor 54 includes the cooling water branch pipes 54a and the water recovery unit distribution spray nozzles 54b provided in each of the cooling water branch pipes 54a. This configuration enables uniform spray of the cooling water over a portion through which the exhaust gas flows inside the container main section 51. The efficiency in the gas-liquid contact between the exhaust gas and the cooling water can thereby be enhanced.

The exhaust gas that has flowed through the bypass line 40 is sprayed from the exhaust gas bypass nozzles 42 upwardly in the container main section 51 and mixed with the exhaust gas cooled inside the container main section 51 in a zone above the distributor 54 in the container main section 51. The mixed exhaust gases are discharged from the discharge section 52 by way of the tapered flow path section 53 of the water recovery unit 32.

In the first embodiment, the bypass branch pipes 41 and the exhaust gas bypass nozzles 42 as the downstream end of the bypass line 40 are disposed above the distributor 54, specifically, on the side downstream in the flow direction of the exhaust gas with respect to the zone in which the exhaust gas is cooled by the cooling water. This configuration allows the exhaust gas that flows into the water recovery unit 32 by way of the bypass line 40 to avoid cooling by the cooling water from the distributor 54. Specifically, the bypass line 40 functions as a bypass flow path through which part of the exhaust gas from the exhaust gas flow path 31 flows so as to avoid the cooling by the cooling water inside the water recovery unit 32 (so as to bypass the water recovery unit packing 55 and the distributor 54). Thus, the exhaust gas from the bypass line 40 has a temperature higher than a temperature of the exhaust gas cooled inside the container main section 51. The cooled exhaust gas is therefore heated by being mixed with the high temperature exhaust gas from the bypass line 40.

The stack or the exhaust gas flow path downstream of the water recovery unit is typically designed to be compatible with high flow rates of 10 to 20 m/s in view of diffusion of the exhaust gas into the atmosphere. A configuration that allows the high temperature exhaust gas to bypass the water recovery unit to thereby flow into, for example, the stack downstream of the water recovery unit does not promote sufficient mixing of the exhaust gas that bypasses the water recovery unit with the exhaust gas that is cooled by passing through the water recovery unit. In contrast, in the first embodiment, the bypass line 40 is connected to the container main section 51 in which the flow rate of the exhaust gas is lower than the flow rate in the stack or the exhaust gas flow path downstream of the water recovery unit. This configuration can promote sufficient mixing of the exhaust gas from the bypass line 40 with the exhaust gas cooled inside the container main section 51.

The bypass line 40 has the bypass branch pipes 41 and the exhaust gas bypass nozzles 42 provided in each of the bypass branch pipes 41 at its downstream end. This configuration can promote uniform mixing of the high temperature exhaust gas from the bypass line 40 with the exhaust gas cooled in the container main section 51. Thus, the whole of the cooled exhaust gas is reliably heated, so that part of the cooled exhaust gas can be prevented from being discharged as wet steam from the water recovery unit 32.

As described above, the configuration of the first embodiment is characterized in that the exhaust gas mixer (the bypass branch pipes 41 and the exhaust gas bypass nozzles 42) of the bypass line 40 is disposed inside the water recovery unit 32 in which the flow rate of the exhaust gas is lower than in the stack or the exhaust gas flow path downstream of the water recovery unit 32, wherein the exhaust gas mixer is capable of promoting uniform mixing of the exhaust gas that passes through the water recovery unit packing 55 and the distributor 54 with the exhaust gas that bypasses the water recovery unit packing 55 and the distributor 54.

The recovery water recovered by the water recovery unit 32 is delivered by the water recovery circulation water pump 37 to the water recovery circulation water cooler 34 via the recovery water delivery line 35. The recovery water is cooled by the water recovery circulation water cooler 34 and then is resupplied as the cooling water to the water recovery unit 32 via the cooling water supply line 36.

It is noted that, of the exhaust gas treatment system 3, the water recovery unit 32 and the circulation cooling system 33 may be regarded as a water recovery system that recovers moisture contained in the exhaust gas, such as the water fed to the humidification tower 21 (see Fig. 1) and the gas turbine system 1 (see Fig. 1) and water content generated as a result of combustion of fuel.

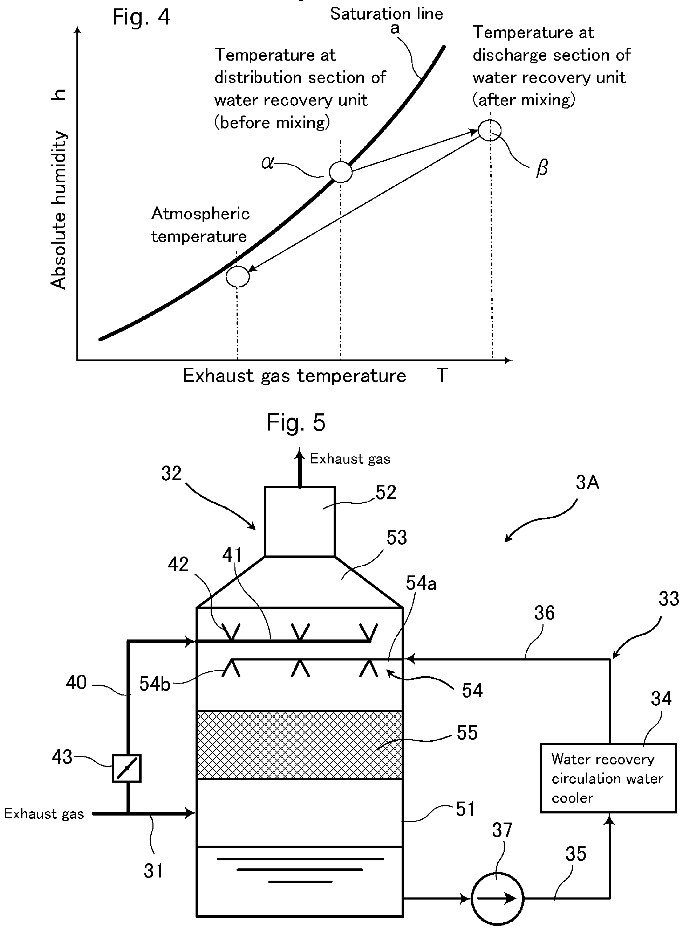

The following describes, with reference to Figs. 2 and 4, an effect of preventing plume from being generated in the exhaust gas treatment system for the advanced humid air turbine system according to the first embodiment of the present invention.

Fig. 4 is a characteristic diagram of a relation between an exhaust gas temperature and absolute humidity in the advanced humid air turbine system according to the first embodiment of the present invention. In Fig. 4, the ordinate h denotes the absolute humidity and the abscissa T denotes the exhaust gas temperature. In Fig. 4, the heavy line 'a' indicates a saturation line of water and the arrow indicates changes in an exhaust gas condition up to discharge of the exhaust gas into the atmosphere. In Fig. 4, the same elements as used in Figs. 1 to 3 are each identified by the same reference number and detailed description of these elements is therefore omitted herein.

In Fig. 4, the exhaust gas condition when changing in a zone below saturation line 'a' allows generation of the plume to be prevented. The exhaust gas cooled in the water recovery unit 32 shown in Fig. 2 is plotted at position α on the saturation line of the temperature (the temperature before mixing) at the distributor 54 inside the water recovery unit 32. The exhaust gas plotted at position α, after going through its uniform mixing with the exhaust gas having bypassed the water recovery unit packing 55 and the distributor 54 (the zone in which the exhaust gas is cooled) by way of the bypass line 40, is re-plotted at position β of the temperature (the temperature after mixing) at the discharge section 52 of the water recovery unit 32. Change in the exhaust gas condition from position α to position β is because of the following reason. Specifically, because the exhaust gas that has bypassed the water recovery unit packing 55 and the distributor 54 has a temperature higher than the temperature of the exhaust gas that has passed through the water recovery unit packing 55 and the distributor 54, the temperature of the mixed exhaust gases becomes higher than the temperature of the cooled exhaust gas before mixing. Additionally, the exhaust gas that has bypassed the water recovery unit packing 55 and the distributor 54 has an absolute humidity higher than an absolute humidity of the exhaust gas that has passed through the water recovery unit packing 55 and the distributor 54. Thus, the absolute humidity of the exhaust gas after mixing, though it increases to a level higher than the absolute humidity of the cooled exhaust gas before mixing, is plotted at a position below saturation line 'a'. The exhaust gas discharged into the atmosphere via the stack in this condition reduces its temperature to the atmospheric temperature, while releasing moisture into the atmosphere. The plume is generated when the moisture is rapidly released into the atmosphere upon contact with saturation line 'a' and the moisture in the atmosphere exceeds the amount of saturated water vapor. Thus, no plume is generated, if the condition change follows the pattern shown in Fig. 4.

As described above, the exhaust gas that flows into the water recovery unit 32 through the exhaust gas flow path 31 is cooled by the cooling water from the distributor 54 to become wet steam. Part of the water content in the exhaust gas condenses and is recovered. The exhaust gas in the form of the wet steam having the reduced absolute humidity is uniformly mixed with the high temperature exhaust gas flowing in the water recovery unit 32 through the bypass line 40 and is thus generally and reliably heated. The mixed exhaust gases, even when they are discharged into the atmosphere, undergo changes in their conditions in the zone below saturation line 'a', so that the plume can be prevented from being generated.

As described above, in the advanced humid air turbine system according to the first embodiment of the present invention and the exhaust gas treatment system for the advanced humid air turbine system according to the first embodiment, the bypass line (bypass flow path) 40 that bypasses the cooling in the water recovery unit 32 has the downstream end disposed at a position above the distributor 54 (downstream in the flow direction of the exhaust gas with respect to the zone in which the exhaust gas is cooled) inside the water recovery unit 32 in which the flow rate of the exhaust gas is lower than the flow rate in the stack or the exhaust gas flow path downstream of the water recovery unit 32. This configuration enables sufficient mixing of the cooled exhaust gas with the exhaust gas at high temperatures from the bypass line (bypass flow path) 40. The plume can thus be prevented from being generated without the need to provide a heater for heating the cooled exhaust gas.

Additionally, in the first embodiment, the bypass line 40 has the upstream end connected to the exhaust gas flow path 31 upstream of the water recovery unit 32 and the downstream end disposed at the position above the distributor 54 (downstream in the flow direction of the exhaust gas with respect to the zone in which the exhaust gas is cooled) inside the water recovery unit 32. This configuration allows the exhaust gas that flows in the water recovery unit 32 through the bypass line 40 to reliably avoid an effect of the cooling water sprayed from the distributor 54.

### [Modification of First Embodiment]

The following describes, with reference to Fig. 5, a modification of the advanced humid air turbine system according to the first embodiment of the present invention and the exhaust gas treatment system for the advanced humid air turbine system according to the first embodiment.

Fig. 5 is a configuration diagram of an exhaust gas treatment system for an advanced humid air turbine system according to a modification of the first embodiment of the present invention. In Fig. 5, the arrows indicate directions of flows of the exhaust gas and water in a circulation cooling system of the exhaust gas treatment system. In Fig. 5, the same elements as used in Figs. 1 to 4 are each identified by the same reference number and detailed description of these elements is therefore omitted herein.

The modification, shown in Fig. 5, of the advanced humid air turbine system according to the first embodiment of the present invention and the exhaust gas treatment system for the advanced humid air turbine system according to the first embodiment includes, to add to the elements included in the first embodiment, an exhaust gas bypass damper 43 that adjusts a bypass flow rate of the exhaust gas. An exhaust gas treatment system 3A controls opening of the exhaust gas bypass damper 43 according to whether plume is generated at a stack outlet (not shown). The control of the opening of the exhaust gas bypass damper 43 allows a ratio of a bypass flow rate of the exhaust gas flowing through the bypass line 40 to a flow rate of the exhaust gas cooled in the water recovery unit 32 to be adjusted to an appropriate value.

The modification of the advanced humid air turbine system according to the first embodiment of the present invention and the exhaust gas treatment system for the advanced humid air turbine system according to the first embodiment described above can achieve the same effects as the effects achieved by the first embodiment described previously.

The modification of the first embodiment includes the exhaust gas bypass damper 43, for adjusting the flow rate of the exhaust gas, disposed in the bypass line 40 that bypasses the water recovery unit packing 55 and the distributor 54 (the zone in which the exhaust gas is cooled) in the water recovery unit 32. This configuration allows the exhaust gas bypass damper 43 to be used for adjusting the bypass flow rate of the exhaust gas, so that the plume can be reliably prevented from being generated.

### [Second Embodiment]

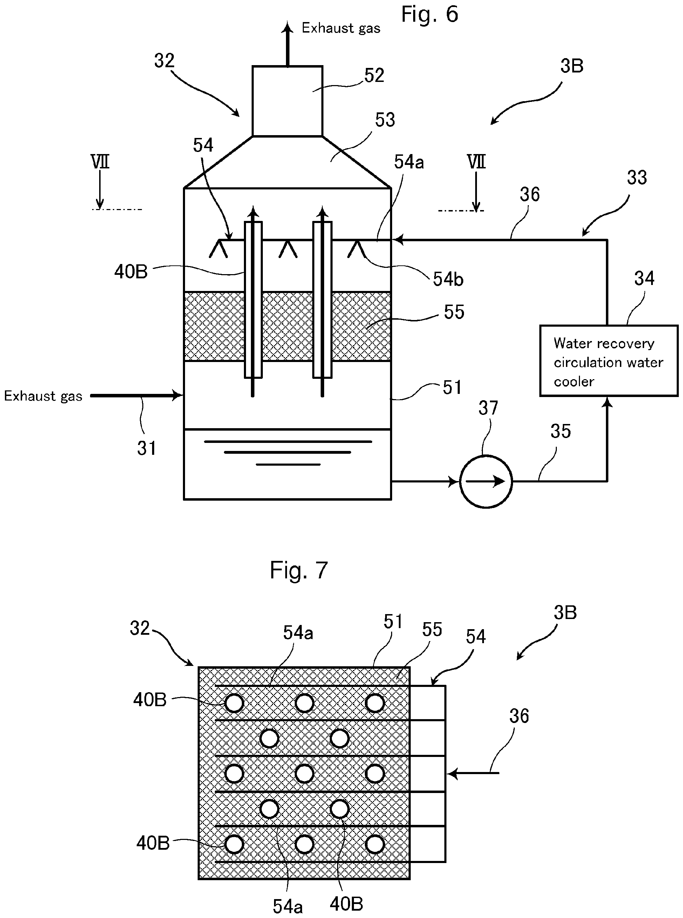

The following describes, with reference to Figs. 6 and 7, an advanced humid air turbine system according to a second embodiment of the present invention and an exhaust gas treatment system for the advanced humid air turbine system according to the second embodiment.

Fig. 6 is a configuration diagram of the exhaust gas treatment system for the advanced humid air turbine system according to the second embodiment of the present invention. Fig. 7 is a schematic transverse sectional view of a water recovery unit as a component of the exhaust gas treatment system for the advanced humid air turbine system according to the second embodiment of the present invention shown in Fig. 6, taken along the arrow VII-VII in Fig. 6. In Figs. 6 and 7, the arrows indicate directions of flows of the exhaust gas and water in a circulation cooling system of the exhaust gas treatment system. In Figs. 6 and 7, the same elements as used in Figs. 1 to 5 are each identified by the same reference number and detailed description of these elements is therefore omitted herein.

The advanced humid air turbine system according to the second embodiment of the present invention and the exhaust gas treatment system for the advanced humid air turbine system according to the second embodiment shown in Figs. 6 and 7 include, instead of the bypass line 40 of the first embodiment, a plurality of internal bypass lines 40B disposed inside the container main section 51 of the water recovery unit 32. Specifically, as shown in Fig. 6, each of the internal bypass lines 40B of an exhaust gas treatment system 3B extends in the vertical direction (the flow direction of the exhaust gas) and penetrates the water recovery unit packing 55. The internal bypass lines 40B each have an upper side end (downstream end) disposed above the distributor 54 (downstream of the flow direction of the exhaust gas with respect to the distributor 54). Referring to Fig. 7, the internal bypass lines 40B are arranged in a zigzag pattern.

The following describes, with reference to Figs. 6 and 7, operations of the exhaust gas treatment system for the advanced humid air turbine system according to the second embodiment of the present invention.

As in the first embodiment, most part of the exhaust gas that has flowed into the lower portion of the water recovery unit 32 through the exhaust gas flow path 31 shown in Fig. 6 passes through the water recovery unit packing 55. The passage of the most part of the exhaust gas through the water recovery unit packing 55 causes the most part of the exhaust gas to be cooled through gas-liquid contact with the cooling water to become wet steam. Part of the water content in the exhaust gas condenses and is recovered. In addition, gas-liquid contact with the cooling water sprayed from the distributor 54 further achieves cooling and part of the water content in the exhaust gas condenses and is recovered.

Meanwhile, the rest of the exhaust gas flows through the internal bypass lines 40B toward a zone above the distributor 54 and is mixed, in the zone upward of the distributor 54 inside the container main section 51, with the exhaust gas cooled inside the container main section 51. Because the exhaust gas that flows through the internal bypass lines 40B bypasses the water recovery unit packing 55 and the distributor 54, this exhaust gas can avoid the cooling by the cooling water from the distributor 54. Specifically, the internal bypass lines 40B function as bypass flow paths through which part of the exhaust gas from the exhaust gas flow path 31 flows so as to avoid the cooling by the cooling water inside the water recovery unit 32. As a result, the exhaust gas from the internal bypass lines 40B has a temperature higher than a temperature of the exhaust gas cooled inside the container main section 51 so as to be capable of heating the cooled exhaust gas.

In the second embodiment, the exhaust gas from the internal bypass lines 40B and the exhaust gas cooled inside the container main section 51 are mixed with each other in the container main section 51 in which the flow rate of the exhaust gas is lower than the flow rate in the stack or the exhaust gas flow path downstream of the water recovery unit. The mixing of these exhaust gases can thus be sufficiently promoted.

In the second embodiment, the internal bypass lines 40B are arranged in a zigzag pattern as shown in Fig. 7. This arrangement can promote uniform mixing of the high temperature exhaust gas from the internal bypass lines 40B with the exhaust gas cooled in the container main section 51. The whole of the cooled exhaust gas can thus be reliably heated and part of the cooled exhaust gas can be prevented from being discharged as wet steam from the water recovery unit 32.

The advanced humid air turbine system according to the second embodiment of the present invention and the exhaust gas treatment system for the advanced humid air turbine system according to the second embodiment described above can achieve the same effects as the effects achieved by the first embodiment described previously.

In the second embodiment, the internal bypass lines 40B disposed inside the water recovery unit 32 serve as a bypass flow paths for avoiding the cooling by the cooling water from the distributor 54. This configuration allows the internal bypass lines 40B to be disposed in the water recovery unit 32 before the water recovery unit 32 is installed. This arrangement permits easier working than in the first embodiment that uses as the bypass flow path the bypass line 40 that needs to be connected to the water recovery unit 32 and the exhaust gas flow path 31.

Additionally, in the second embodiment, the internal bypass lines 40B disposed inside the water recovery unit 32 serve as a structure for promoting uniform mixing of the exhaust gas that is cooled inside the container main section 51 with the exhaust gas that avoids the cooling. This configuration makes for a simpler structure as compared with the first embodiment that includes the bypass branch pipes 41 and the exhaust gas bypass nozzles 42 disposed at each of the bypass branch pipes 41, so that reduction in manufacturing cost can be achieved.

### [Third Embodiment]

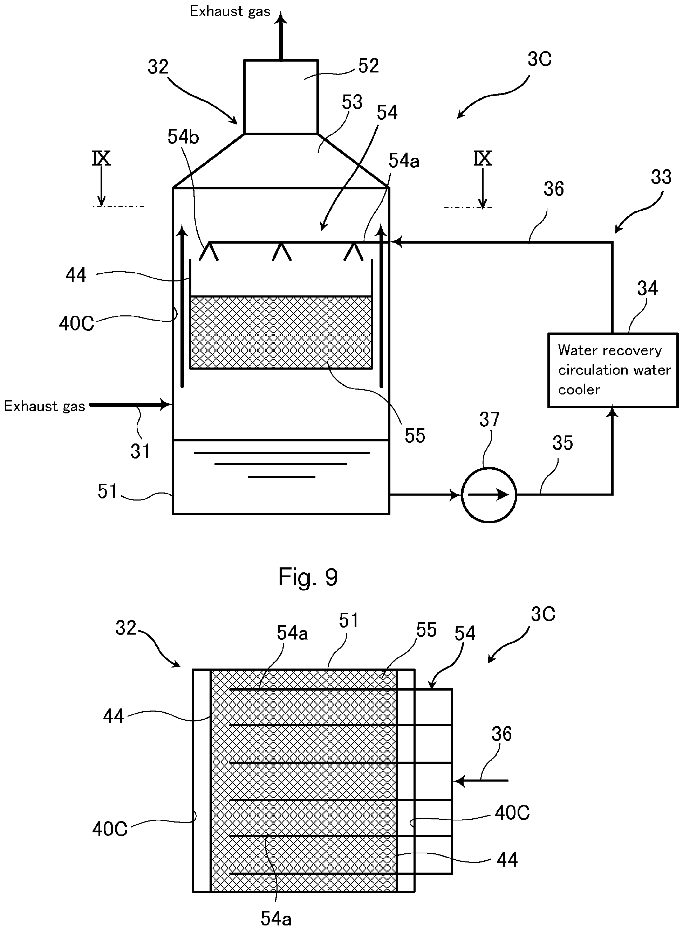

The following describes, with reference to Figs. 8 and 9, an advanced humid air turbine system according to a third embodiment of the present invention and an exhaust gas treatment system for the advanced humid air turbine system according to the third embodiment.

Fig. 8 is a configuration diagram of the exhaust gas treatment system for the advanced humid air turbine system according to the third embodiment of the present invention. Fig. 9 is a schematic transverse sectional view of a water recovery unit as a component of the exhaust gas treatment system for the advanced humid air turbine system according to the third embodiment of the present invention shown in Fig. 8, taken along the arrow IX-IX in Fig. 8. In Figs. 8 and 9, the arrows indicate directions of flows of the exhaust gas and water in a circulation cooling system of the exhaust gas treatment system. In Figs. 8 and 9, the same elements as used in Figs. 1 to 7 are each identified by the same reference number and detailed description of these elements is therefore omitted herein.

The advanced humid air turbine system according to the third embodiment of the present invention and the exhaust gas treatment system for the advanced humid air turbine system according to the third embodiment shown in Figs. 8 and 9 include, instead of the internal bypass lines 40B of the second embodiment, internal bypass flow paths 40C disposed to extend along inner sides of side walls (side walls extending in parallel with the flow direction of the exhaust gas) of the container main section 51 of the water recovery unit 32.

Specifically, as shown in Figs. 8 and 9, each of the internal bypass flow paths 40C of an exhaust gas treatment system 3C is defined by the side wall of the container main section 51 and an internal partitioning member 44 disposed inside the side wall of the container main section 51 so as to be spaced away from and to face the side wall. The internal partitioning member 44 extends in the vertical direction (the flow direction of the exhaust gas) at least from a lower end of the water recovery unit packing 55 to a level above (downstream in the flow direction of the exhaust gas with respect to) the water recovery unit distribution spray nozzles 54b. Additionally, the internal partitioning members 44 are disposed on both opposed sides of the side walls of the container main section 51 that has a substantially cubic shape. In figs. 8 and 9, the number of the internal bypass flow paths 40C is two, but it may be at least one.

In the third embodiment, the internal bypass flow paths 40C are defined to extend to a level above the distributor 54. This configuration allows the exhaust gas to circumvent cooling by the cooling water from the distributor 54. Specifically, the internal bypass flow paths 40C function as bypass flow paths through which part of the exhaust gas from the exhaust gas flow path 31 flows so as to avoid the cooling by the cooling water in the water recovery unit 32. As a result, the exhaust gas from the internal bypass flow paths 40C has a temperature higher than a temperature of the exhaust gas cooled inside the container main section 51 so as to be capable of heating the cooled exhaust gas.

In the third embodiment, too, the exhaust gas from the internal bypass flow paths 40C and the exhaust gas cooled inside the container main section 51 are mixed with each other in the container main section 51 in which the flow rate of the exhaust gas is lower than the flow rate in the stack or the exhaust gas flow path downstream of the water recovery unit 32. The mixing of these exhaust gases can thus be sufficiently promoted.

The advanced humid air turbine system according to the third embodiment of the present invention and the exhaust gas treatment system for the advanced humid air turbine system according to the third embodiment described above can achieve the same effects as the effects achieved by the second embodiment described previously.

In the third embodiment, the disposition of the internal partitioning members 44 on the inside of the side walls of the container main section 51 allows the internal bypass flow paths 40C to be defined within the container main section 51. This configuration allows the number of members used as bypass flow paths to be reduced as compared with the second embodiment in which the internal bypass lines 40B are disposed inside the water recovery unit 32. Working of bypass flow paths inside the water recovery unit 32 can thus be made easier.

### [Miscellaneous Embodiments]

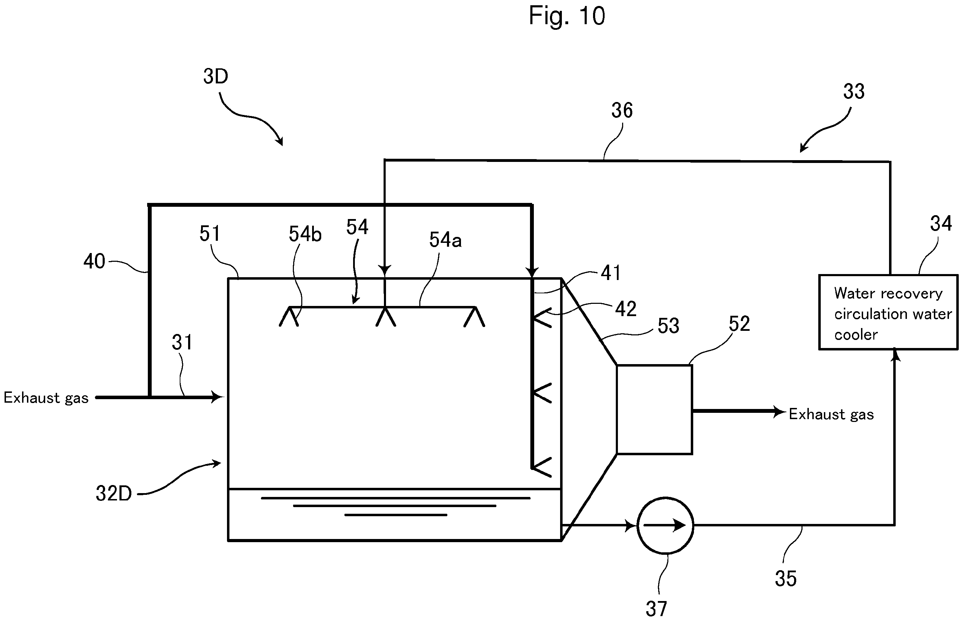

Each of the first to third embodiments described above has been exemplified by the vertically oriented water recovery unit 32 in which the exhaust gas flows from below upward. Nonetheless, as shown in Fig. 10, a horizontally oriented water recovery unit 32D in which the exhaust gas flows in a horizontal direction (from the left to right in Fig. 10) may, for example, be employed. The exhaust gas that flows into the container main section 51 through the exhaust gas flow path 31 is cooled in the horizontal zone over which the distributor 54 extends to thereby become wet steam. Part of water content in the exhaust gas condenses and is recovered.

Fig. 10 is a configuration diagram of an exhaust gas treatment system for an advanced humid air turbine system according to a further embodiment of the present invention. In Fig. 10, the arrows indicate directions of flows of the exhaust gas and water in a circulation cooling system of the exhaust gas treatment system. In Fig. 10, the same elements as used in Figs. 1 to 9 are each identified by the same reference number and detailed description of these elements is therefore omitted herein.

In the further embodiment shown in Fig. 10, the bypass line 40 of an exhaust gas treatment system 3D has a downstream end (the bypass branch pipes 41 and the exhaust gas bypass nozzles 42) disposed at a position to the right (downstream in the flow direction of the exhaust gas) of the right end (a most downstream end in the flow direction of the exhaust gas) of the distributor 54 in the container main section 51 of the water recovery unit 32D. This configuration allows the same effects as the effects achieved by the above-described first embodiment to be achieved. It is noted that, in place of the bypass line 40, the internal bypass lines 40B in the second embodiment may be disposed so as to extend in the horizontal direction in the water recovery unit 32D or the internal bypass flow path 40C in the third embodiment may be defined so as to extend in the horizontal direction in the water recovery unit 32D.

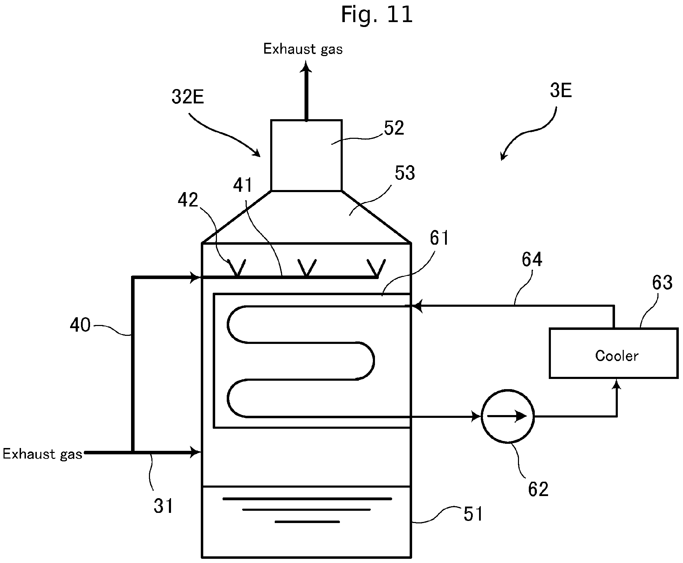

While each of the embodiments described previously has been exemplified by the water recovery unit 32 that includes the distributor 54 for spraying the cooling water to cool the exhaust gas through the gas-liquid contact, a water recovery unit 32E may include a heat exchanger 61 that cools the exhaust gas as shown in Fig. 11.

Fig. 11 is a configuration diagram of an exhaust gas treatment system for an advanced humid air turbine system according to a still further embodiment of the present invention. In Fig. 11, the arrows indicate directions of flows of the exhaust gas and a refrigerant of the heat exchanger 61. In Fig. 11, the same elements as used in Figs. 1 to 10 are each identified by the same reference number and detailed description of these elements is therefore omitted herein.

Specifically, in an exhaust gas treatment system 3E, the water recovery unit 32E includes the heat exchanger 61 disposed at a position above (downstream in the flow direction of the exhaust gas with respect to) a connection portion of the container main section 51 of the water recovery unit 32E and the exhaust gas flow path 31. The heat exchanger 61 performs heat exchange between the exhaust gas that flows through the container main section 51 and the refrigerant that circulates through a heat exchanger tube. The refrigerant of the heat exchanger 61 is sent to a cooler 63 by a pump 62 and cooled in the cooler 63 before flowing back to the heat exchanger 61 through a circulation line 64. The exhaust gas that flows into the container main section 51 through the exhaust gas flow path 31 is cooled in a zone of the heat exchanger 61 to become wet steam and part of water content in the exhaust gas condenses and is recovered.

In the still further embodiment shown in Fig. 11, the bypass line 40 has a downstream end (the bypass branch pipes 41 and the exhaust gas bypass nozzles 42) disposed at a position above (downstream in the flow direction of the exhaust gas with respect to) an upper end (a downstream end in the flow direction of the exhaust gas) of the heat exchanger 61 inside the container main section 51. This configuration allows the same effects as the effects achieved by the above-described first embodiment to be achieved. It is noted that, in place of the bypass line 40, the internal bypass lines 40B in the second embodiment or the internal bypass flow path 40C in the third embodiment may be employed.

The embodiments described above have been exemplified by a configuration in which the gas turbine system 1 includes the water atomization cooling unit 11. The gas turbine system in the advanced humid air turbine system may nonetheless be configured so as not to include a water atomization cooling unit. It should, however, be noted that, as a system, the configuration including the water atomization cooling unit 11 can increase output and enhance power generation efficiency.

In the embodiments described above, the humidification-regeneration cycle system 2 has been exemplarily described to include the humidification tower 21, the recuperator 22, the economizer 23, the air cooler 24, the humidification tower circulation water pump 25, and the humidification tower makeup water pump 26. The humidification-regeneration cycle system is nonetheless required only to include at least a humidification tower and a recuperator. Alternatively, the humidification-regeneration cycle system may even be another type of humidification system, such as a heat recovery boiler.

The above-described first embodiment has been exemplarily described to include the bypass branch pipes 41 and the exhaust gas bypass nozzles 42 disposed inside the container main section 51. The bypass branch pipes 41 and the exhaust gas bypass nozzles 42 may nonetheless be disposed at the tapered flow path section 53 that has a flow path cross-sectional area greater than a flow path cross-sectional area of the discharge section 52. To promote uniform mixing of the exhaust gas that passes through the water recovery unit packing 55 and the distributor 54 with the exhaust gas that bypasses them, however, preferably the bypass branch pipes 41 and the exhaust gas bypass nozzles 42 are disposed in a space between the distributor 54 and the tapered flow path section 53.

In the second embodiment described above, the internal bypass lines 40B has been exemplarily described to be arranged in a zigzag pattern. The arrangement of the internal bypass lines 40B may be in any other pattern when the pattern permits uniform mixing of the exhaust gas that passes through the water recovery unit packing 55 and the distributor 54 with the exhaust gas that bypasses them. The internal bypass lines 40B may be arranged, for example, in a square pattern. The uniform mixing of the exhaust gases can be achieved at least when the internal bypass lines 40B are spaced apart from each other.

## Claims

1. An exhaust gas treatment system for an advanced humid air turbine system, the exhaust gas treatment system treating water content contained in an exhaust gas discharged from a gas turbine system (1) in which a working fluid is humidified, comprising:
an exhaust gas flow path (31) through which the exhaust gas discharged from the gas turbine system (1) flows;
a water recovery unit (32; 32D; 32E) connected to the exhaust gas flow path (31), the water recovery unit being configured to cool an exhaust gas that flows in from the exhaust gas flow path (31) by a refrigerant to thereby recover water content contained in the exhaust gas; and
at least one bypass flow path (40; 40B; 40C) through which part of the exhaust gas from the exhaust gas flow path (31) flows so as to avoid cooling by the refrigerant in the water recovery unit (32; 32D; 32E), **characterized in that**
the at least one bypass flow path (40; 40B; 40C) has a downstream end disposed in the water recovery unit (32; 32D; 32E) at a position downstream in a flow direction of the exhaust gas with respect to a zone in which the exhaust gas is cooled in the water recovery unit (32; 32D; 32E).

2. The exhaust gas treatment system for an advanced humid air turbine system according to claim 1, wherein the at least one bypass flow path (40; 40B; 40C) comprises a bypass line (40) having an upstream side connected to the exhaust gas flow path (31) and a downstream side connected to the water recovery unit (32; 32D; 32E).

3. The exhaust gas treatment system for an advanced humid air turbine system according to claim 2, wherein the bypass line (40) includes a plurality of bypass branch pipes (41) at a downstream end thereof inside the water recovery unit (32; 32D; 32E) and a plurality of exhaust gas bypass nozzles (42) disposed at each of the bypass branch pipes (41).

4. The exhaust gas treatment system for an advanced humid air turbine system according to claim 2 or 3, further comprising:
an exhaust gas bypass damper (43) disposed in the bypass line (40), the exhaust gas bypass damper adjusting a flow rate of an exhaust gas that flows through the bypass line (40).

5. The exhaust gas treatment system for an advanced humid air turbine system according to at least one of the preceding claims, wherein the at least one bypass flow path (40; 40B; 40C) comprises a plurality of internal bypass lines (40B) disposed inside the water recovery unit (32; 32D; 32E) so as to extend in the flow direction of the exhaust gas, the internal bypass lines being spaced apart from each other.

6. The exhaust gas treatment system for an advanced humid air turbine system according to at least one of the preceding claims, wherein the at least one bypass flow path (40; 40B; 40C) comprises at least one internal bypass flow path (40C) defined by a wall extending in parallel with the flow direction of the exhaust gas in the water recovery unit (32; 32D; 32E) and an internal partitioning member (44) disposed inside the water recovery unit (32; 32D; 32E) away from the wall of the water recovery unit, the internal bypass flow path (40C) extending along the flow direction of the exhaust gas.

7. The exhaust gas treatment system for an advanced humid air turbine system according to at least one of the preceding claims, wherein
the water recovery unit (32; 32D) includes:
a container main section (51) connected to the exhaust gas flow path (31);
a discharge section (52) having a flow path cross-sectional area smaller than a flow path cross-sectional area of the container main section (51), the discharge section discharging the exhaust gas;
a tapered flow path section (53) connecting the container main section (51) to the discharge section (52); and
a distributor (54) disposed downstream in the flow direction of the exhaust gas with respect to a connection portion of the container main section (51) and the exhaust gas flow path (31), the distributor spraying cooling water as the refrigerant, wherein
the at least one bypass flow path (40; 40B; 40C) has a downstream end disposed in the tapered flow path section (53) or at a position downstream in the flow direction of the exhaust gas with respect to the distributor (54) inside the container main section (51).

8. An advanced humid air turbine system, comprising:
a gas turbine system (1) including
a compressor (12) that compresses air,
a combustor (13) that burns fuel with compressed air from the compressor to thereby generate a combustion gas, and
a turbine (14) driven by the combustion gas from the combustor (13); and
a humidification-regeneration cycle system (2) including
a humidification tower (21) that humidifies compressed air delivered from the compressor (12), and
a recuperator (22) that preheats compressed air containing a high water content from the humidification tower (21) by heat exchange with an exhaust gas from the turbine (14); and
an exhaust gas treatment system (3; 3A; 3B; 3C; 3D; 3E) including:
an exhaust gas flow path (31) through which an exhaust gas passed through the recuperator (22) flows,
a water recovery unit (32; 32D; 32E) connected to the exhaust gas flow path (31), the water recovery unit being configured to cool the exhaust gas that flows in from the exhaust gas flow path (31) by a refrigerant to thereby recover water content contained in the exhaust gas, and
at least one bypass flow path (40; 40B; 40C) through which part of the exhaust gas from the exhaust gas flow path (31) flows so as to avoid cooling by the refrigerant in the water recovery unit (32; 32D; 32E),
**characterized in that** the at least one bypass flow path (40; 40B; 40C) has a downstream end disposed in the water recovery unit (32; 32D; 32E) at a position downstream in a flow direction of the exhaust gas with respect to a zone in which the exhaust gas is cooled in the water recovery unit (32; 32D; 32E).

## Patentansprüche

1. Abgasbehandlungssystem für ein erweitertes Feuchtluftturbinensystem, wobei das Abgasbehandlungssystem den Wassergehalt behandelt, der in einem Abgas enthalten ist, das aus einem Gasturbinensystem (1) ausgelassen wird, in dem ein Arbeitsfluid befeuchtet wird, das Folgendes umfasst:
einen Abgasströmungsweg (31), durch den das Abgas strömt, das aus dem Gasturbinensystem (1) ausgelassen wird;
eine Wasserrückgewinnungseinheit (32; 32D, 32E), die mit dem Abgasströmungsweg (31) verbunden ist, wobei die Wasserrückgewinnungseinheit konfiguriert ist, ein Abgas, das aus dem Abgasströmungsweg (31) einströmt, durch ein Kühlmittel zu kühlen, um dadurch den Wassergehalt zurückzugewinnen, der im Abgas enthalten ist; und
mindestens einen Umgehungsströmungsweg (40; 40B; 40C), durch den ein Teil des Abgases aus dem Abgasströmungsweg (31) strömt, um das Kühlen durch das Kühlmittel in der Wasserrückgewinnungseinheit (32; 32D, 32E) zu vermeiden, **dadurch gekennzeichnet, dass**
der mindestens eine Umgehungströmungsweg (40; 40B, 40C) ein stromabseitiges Ende aufweist, das in der Wasserrückgewinnungseinheit (32; 32D; 32E) an einer Position in einer Strömungsrichtung des Abgases in Bezug auf einen Bereich, in dem das Abgas in der Wasserrückgewinnungseinheit (32; 32D; 32E) gekühlt wird, stromabwärts angeordnet ist.

2. Abgasbehandlungssystem für ein erweitertes Feuchtluftturbinensystem nach Anspruch 1, wobei der mindestens eine Umgehungsströmungsweg (40; 40B; 40C) eine Umgehungsleitung (40) mit einer stromaufseitigen Seite, die mit dem Abgasströmungsweg (31) verbunden ist, und einer stromabseitigen Seite, die mit der Wasserrückgewinnungseinheit (32; 32D; 32E) verbunden ist, umfasst.

3. Abgasbehandlungssystem für ein erweitertes Feuchtluftturbinensystem nach Anspruch 2, wobei die Umgehungsleitung (40) mehrere Umgehungszweigrohre (41) an einem stromabseitigen Ende davon im Inneren der Wasserrückgewinnungseinheit (32; 32D; 32E) und mehrere Abgasumgehungsdüsen (42), die an jedem der Umgehungszweigrohre (41) angeordnet sind, enthält.

4. Abgasbehandlungssystem für ein erweitertes Feuchtluftturbinensystem nach Anspruch 2 oder 3, das ferner Folgendes umfasst:
eine Abgasumgehungsdrosselklappe (43), die in der Umgehungsleitung (40) angeordnet ist, wobei die Abgasumgehungsdrosselklappe eine Durchflussmenge eines Abgases einstellt, das durch die Umgehungsleitung (40) strömt.

5. Abgasbehandlungssystem für ein erweitertes Feuchtluftturbinensystem nach mindestens einem der vorhergehenden Ansprüche, wobei der mindestens eine Umgehungsströmungsweg (40; 40B; 40C) mehrere innere Umgehungsleitungen (40B) umfasst, die im Inneren der Wasserrückgewinnungseinheit (32; 32D; 32E) derart angeordnet sind, dass sie sich in der Strömungsrichtung des Abgases erstrecken, wobei die inneren Umgehungsleitungen voneinander beabstandet sind.

6. Abgasbehandlungssystem für ein erweitertes Feuchtluftturbinensystem nach mindestens einem der vorhergehenden Ansprüche, wobei der mindestens eine Umgehungsströmungsweg (40; 40B; 40C) mindestens einen inneren Umgehungsströmungsweg (40C) umfasst, der durch eine Wand, die sich in der Wasserrückgewinnungseinheit (32; 32D; 32E) parallel zur Strömungsrichtung des Abgases erstreckt, und ein inneres Trennelement (44), das im Inneren der Wasserrückgewinnungseinheit (32; 32D, 32E) von der Wand der Wasserrückgewinnungseinheit entfernt angeordnet ist, definiert ist, wobei sich der innere Umgehungsströmungsweg (40C) entlang der Strömungsrichtung des Abgases erstreckt.

7. Abgasbehandlungssystem für ein erweitertes Feuchtluftturbinensystem nach mindestens einem der vorhergehenden Ansprüche, wobei
die Wasserrückgewinnungseinheit (32; 32D) Folgendes enthält:
einen Behälterhauptabschnitt (51), der mit dem Abgasströmungsweg (31) verbunden ist;
einen Auslassabschnitt (52), der eine Strömungswegquerschnittsfläche aufweist, die kleiner als eine Strömungswegquerschnittsfläche des Behälterhauptabschnitts (51) ist, wobei der Auslassabschnitt das Abgas auslässt;
einen konisch zulaufenden Strömungswegabschnitt (53), der den Behälterhauptabschnitt (51) mit dem Auslassabschnitt (52) verbindet; und
einen Verteiler (54), der in der Strömungsrichtung des Abgases in Bezug auf einen Verbindungsabschnitt des Behälterhauptabschnitts (51) und des Abgasströmungsweges (31) stromabwärts abgeordnet ist, wobei der Verteiler Kühlwasser als das Kühlmittel versprüht, wobei
der mindestens eine Umgehungsströmungsweg (40; 40B; 40C) ein stromabseitiges Ende aufweist, das in dem konisch zulaufenden Strömungswegabschnitt (53) oder an einer Position in der Strömungsrichtung des Abgases in Bezug auf den Verteiler (54) stromabwärts im Inneren des Behälterhauptabschnitts (51) angeordnet ist.

8. Erweitertes Feuchtluftturbinensystem, das Folgendes umfasst:
ein Gasturbinensystem (1), das Folgendes enthält:
einen Kompressor (12), der Luft komprimiert,
einen Brenner (13), der mit der komprimierten Luft aus dem Kompressor einen Brennstoff verbrennt, um dadurch ein Verbrennungsgas zu erzeugen, und
eine Turbine (14), die durch das Verbrennungsgas aus dem Brenner (13) angetrieben wird; und
ein Befeuchtungsrückgewinnungskreislaufsystem (2), das Folgendes enthält:
einen Befeuchtungsturm (21), der die komprimierte Luft befeuchtet, die aus dem Kompressor (12) geliefert wird, und
einen Wärmetauscher (22), der die komprimierte Luft aus dem Befeuchtungsturm (21); die einen hohen Wassergehalt enthält, durch einen Wärmeaustausch mit einem Abgas aus der Turbine (14) vorheizt; und
ein Abgasbehandlungssystem (3; 3A; 3B; 3C; 3D; 3E), das Folgendes enthält:
einen Abgasströmungsweg (31), durch den ein Abgas strömt, das den Wärmetauscher (22) passiert hat,
eine Wasserrückgewinnungseinheit (32; 32D, 32E), die mit dem Abgasströmungsweg (31) verbunden ist, wobei die Wasserrückgewinnungseinheit konfiguriert ist, das Abgas, das aus dem Abgasströmungsweg (31) einströmt, durch ein Kühlmittel zu kühlen, um dadurch den Wassergehalt zurückzugewinnen, der im Abgas enthalten ist, und
mindestens einen Umgehungsströmungsweg (40; 40B; 40C), durch den ein Teil des Abgases aus dem Abgasströmungsweg (31) strömt, um das Kühlen durch das Kühlmittel in der Wasserrückgewinnungseinheit (32; 32D, 32E) zu vermeiden,
**dadurch gekennzeichnet, dass** der mindestens eine Umgehungströmungsweg (40; 40B, 40C) ein stromabseitiges Ende aufweist, das in der Wasserrückgewinnungseinheit (32; 32D; 32E) an einer Position in einer Strömungsrichtung des Abgases in Bezug auf einen Bereich, in dem das Abgas in der Wasserrückgewinnungseinheit (32; 32D; 32E) gekühlt wird, stromabwärts angeordnet ist.

## Revendications

1. Système de traitement de gaz d'échappement destiné à un système avancé de turbine à air humide, le système de traitement de gaz d'échappement traitant un contenu d'eau contenu dans un gaz d'échappement évacué depuis un système de turbine à gaz (1) dans lequel un fluide de travail est humidifié, comprenant :
un trajet d'écoulement du gaz d'échappement (31) à travers lequel s'écoule le gaz d'échappement évacué depuis le système de turbine à gaz (1) ;
une unité de récupération d'eau (32 ; 32D ; 32E) reliée au trajet d'écoulement du gaz d'échappement (31), l'unité de récupération d'eau étant configurée de manière à refroidir le gaz d'échappement qui s'y écoule depuis le trajet d'écoulement du gaz d'échappement (31) au moyen d'un réfrigérant pour ainsi récupérer le contenu d'eau contenu dans le gaz d'échappement ; et
au moins un trajet d'écoulement de bypass (40 ; 40B ; 40C) à travers lequel s'écoule une partie du gaz d'échappement provenant du trajet du d'écoulement du gaz d'échappement (31) de façon à éviter le refroidissement par le réfrigérant dans l'unité de récupération d'eau (32 ; 32D ; 32E), **caractérisé en ce que**
ledit au moins un trajet d'écoulement de bypass (40 ; 40B ; 40C) présente une extrémité aval placée dans l'unité de récupération d'eau (32 ; 32D ; 32E) à une position en aval dans une direction d'écoulement du gaz d'échappement par rapport à une zone dans laquelle le gaz d'échappement est refroidi dans l'unité de récupération d'eau (32 ; 32D ; 32E).

2. Système de traitement de gaz d'échappement destiné à un système avancé de turbine à air humide selon la revendication 1, dans lequel le dit au moins un trajet d'écoulement de bypass (40 ; 40B ; 40C) comprend un conduit de bypass (40) ayant un côté amont relié au trajet d'écoulement du gaz d'échappement (31) et un côté aval relié à l'unité de récupération d'eau (32 ; 32D ; 32E).

3. Système de traitement de gaz d'échappement destiné à un système avancé de turbine à air humide selon la revendication 2, dans lequel le conduit de bypass (40) inclut une pluralité de tubes de dérivation de bypass (41) à une extrémité en aval de celui-ci à l'intérieur de l'unité de récupération d'eau (32 ; 32D ; 32E) et une pluralité de buses de bypass de gaz d'échappement (42) disposées à chacun des tubes de dérivation de bypass (41).

4. Système de traitement de gaz d'échappement destiné à un système avancé de turbine à air humide selon les revendications 2 ou 3, comprenant en outre :
un clapet de bypass de gaz d'échappement (43) disposé sur le conduit de bypass (40), le clapet de bypass de gaz d'échappement ajustant un débit d'un gaz d'échappement qui s'écoule dans le conduit de bypass (40).

5. Système de traitement de gaz d'échappement destiné à un système avancé de turbine à air humide selon l'une au moins des revendications précédentes, dans lequel ledit au moins un trajet d'écoulement de bypass (40 ; 40B ; 40C) comprend une pluralité de conduits de bypass internes (40B) disposés à l'intérieur de l'unité de récupération d'eau (32 ; 32D ; 32E) de manière à s'étendre dans la direction d'écoulement du gaz d'échappement, les conduits de bypass internes étant espacés les uns des autres.

6. Système de traitement de gaz d'échappement destiné à un système avancé de turbine à air humide selon l'une au moins des revendications précédentes, dans lequel ledit au moins un trajet d'écoulement de bypass (40 ; 40B ; 40C) comprend au moins un trajet d'écoulement de bypass interne (40C) défini par une paroi s'étendant parallèlement à la direction d'écoulement du gaz d'échappement dans l'unité de récupération d'eau (32 ; 32D ; 32E) et un élément de cloisonnement interne (44) disposé à l'intérieur de l'unité de récupération d'eau (32 ; 32D ; 32E) en éloignement de la paroi de l'unité de récupération d'eau, le trajet d'écoulement de bypass interne (40C) s'étendant le long de la direction d'écoulement du gaz d'échappement.

7. Système de traitement de gaz d'échappement destiné à un système avancé de turbine à air humide selon l'une au moins des revendications précédentes, dans lequel
l'unité de récupération d'eau (32 ; 32D) inclut :
une section principale formant conteneur (51) reliée au trajet d'écoulement du gaz d'échappement (31) ;
une section d'évacuation (52) présentant une superficie de section transversale d'écoulement inférieure à une superfiice de section transversale d'écoulement de la section principale formant conteneur (51), la section d'évacuation évacuant le gaz d'échappement ;
une section de trajet d'écoulement conique (53) reliant la section principale formant conteneur (51) à la section d'évacuation (52) ; et
un distributeur (54) placé en aval dans la direction d'écoulement du gaz d'échappement par rapport à une portion de connexion de la section principale formant conteneur (51) et du trajet d'écoulement du gaz d'échappement (31), le distributeur pulvérisant de l'eau de refroidissement en tant que réfrigérant, dans lequel
ledit au moins un trajet d'écoulement de bypass (40 ; 40B ; 40C) comprend une extrémité aval disposée dans la section de trajet d'écoulement conique (53) ou à une position en aval dans la direction d'écoulement du gaz d'échappement par rapport au distributeur (54) à l'intérieur de la section principale formant conteneur (51).

8. Système avancé de turbine à air humide, comprenant :
un système de turbine à gaz (1) incluant
un compresseur (12) qui comprime l'air,
un dispositif combusteur (13) qui brûle le carburant avec l'air comprimé provenant du compresseur pour ainsi générer un gaz de combustion, et
une turbine (14) entraînée par le gaz de combustion provenant du dispositif combusteur (13 ; et
un système de cycle d'humidification-régénération (2) incluant une tour d'humidification (21) qui humidifie l'air comprimé fourni par le compresseur (12), et
un dispositif de récupération (22) qui préchauffe l'air comprimé contenant une haute teneur en eau provenant de la tour d'humidification (21) par échange de chaleur avec un gaz d'échappement provenant de la turbine (14) ; et
un système de traitement de gaz d'échappement (3 ; 3A ; 3B ; 3C ; 3D ; 3E) incluant :
un trajet d'écoulement du gaz d'échappement (31) à travers lequel s'écoule un gaz d'échappement passé à travers le dispositif de récupération (22),
une unité de récupération d'eau (32 ; 32D ; 32E) reliée au trajet d'écoulement du gaz d'échappement (31), l'unité de récupération d'eau étant configurée de manière à refroidir le gaz d'échappement qui s'y écoule à partir du trajet d'écoulement du gaz d'échappement (31) au moyen d'un réfrigérant pour ainsi récupérer le contenu d'eau contenu dans le gaz d'échappement ; et
au moins un trajet d'écoulement de bypass (40 ; 40B ; 40C) à travers lequel une partie du gaz d'échappement provenant du trajet d'écoulement du gaz d'échappement (31) s'écoule de façon à éviter un refroidissement par le réfrigérant dans l'unité de récupération d'eau (32 ; 32D ; 32E),
**caractérisé en ce que** ledit au moins un trajet d'écoulement de bypass (40 ; 40B ; 40C) présente une extrémité aval disposée dans l'unité de récupération d'eau (32 ; 32D ; 32E) à une position en aval dans une direction d'écoulement du gaz d'échappement par rapport à une zone dans laquelle le gaz d'échappement est refroidi dans l'unité de récupération d'eau (32 ; 32D ; 32E).
